# EUROPÄISCHE PATENTANMELDUNG

(11) **EP 0 732 280 A1**
(43) Veröffentlichungstag der Anmeldung: **18.09.1996**
(21) Anmeldenummer: 95104608.5
(22) Anmeldetag: 29.03.1995
(51) Int. Cl.: B65G 53/46, F26B 25/00

(54) **Verfahren und Vorrichtung zum Abdichten von Dampftrocknern bei Ein- und Austrag von Reibungsverschleiss erzeugendem Gut**

(30) Priorität: 17.03.1995 DE 19509229
(71) Anmelder: MASCHINENFABRIK KARL BRIEDEN GmbH & Co., D-44879 Bochum (DE)
(72) Erfinder: Van Egdom, Richard, D-52388 Nörvenich (DE); Pokropp, Werner, D-44879 Bochum (DE); Klostius, Rainer, D-44879 Bochum (DE)
(74) Vertreter: Herrmann-Trentepohl, Werner, Dipl.-Ing.

(57) **Zusammenfassung**

Bei einem Verfahren und einer Vorrichtung zum Abdichten von Dampftrocknern bei Ein- und Austrag von Reibungsverschleiß erzeugendem Gut ist die Erfindung gekennzeichnet durch die Verwendung einer Zellenradschleuse (1) mit einem in einer drehfesten konischen Verschleißbüchse (11) umlaufenden konischen Zellenrad (5) auf einer Welle (6) mit Axialvorschub in den Konus der Verschleißbüchse (11) zur Spaltverkleinerung (23) und Ringdichtungen (33, 34) an Lippen (23, 24) des Zellenrades mit horizontaler Welle (6), wobei das Gehäuse der Schleuse (1) zum Druckausgleich eine Dampfeinführung (18) und eine Dampfabführung (17), und der Vorschubantrieb (19) der Welle (6) eine automatische Steuerung aufweisen, die den Spalt (23) auf dem kleinstmöglichen Bewegungsspiel für die Dampfabdichtung unter Ausgleich des reibenden Verschleißes hält.

## Beschreibung

Die Erfindung betrifft ein Verfahren und eine Vorrichtung zum Abdichten von Dampftrocknern bei Ein- und Austrag von Reibungsverschleiß erzeugendem Gut.

Die Erfindung bezieht sich insbesondere auf das Trocknen von bei der Rübenzuckergewinnung anfallenden Rübenschnitzeln in Dampftrocknern, weil dabei systembedingt in den Dampftrockner erhebliche Mengen von Reibungsverschleiß erzeugenden Begleitmaterialien mitgeführt werden. Die Erfindung wird deswegen im folgenden anhand dieses Anwendungsgebietes beschrieben.

Die Dampftrocknung der Rübenschnitzel ermöglicht nach der Zuckergewinnung die Gewinnung eines hochwertigen Produktes aus den übrig bleibenden Rübenschnitzeln, welches zum Beispiel als Tierfutter verwendet werden kann. Zur Trocknung muß allerdings überhitzter Dampf mit einer Temperatur von ca. 230°C im Trockner verwendet werden. Trocknungsdampf mit derartigen Temperaturen erfordert eine Aufgabeschleuse, welche das Austreten von Dampf vermeidet bzw. auf ein Minimum reduziert. Damit sind ein geringer Energieverlust und keinerlei Luftverschmutzungen sichergestellt. Diese Schleusen werden dem Dampfdruck und der Dampftemperatur ausgesetzt. Das Trockengut enthält erfahrungsgemäß erhebliche Mengen von Reibungsverschleiß erzeugenden Begleitmaterialien, welche von den Rübenschnitzeln mitgeführt werden. Das führt in der Aufgabeschleuse bei deren Dampfbeaufschlagung bereits zu Strahlverschleiß und führt darüber hinaus an den beweglichen Teilen der Aufgabeschleuse zu beträchtlichen Materialabtragungen. Im Ergebnis treten nach kurzer Zeit erhebliche Abdampfmengen aus der Aufgabeschleuse aus, die aus den geschilderten Gründen nicht zugelassen werden können.

Zellenradschleusen mit einem in einer drehfesten konischen Verschleißbüchse umlaufenden konischen Zellenrad sind als sogenannte Blasversatzmaschinen für die Dünnstromförderung mit Druckluft durch Rohrleitungen im Untertagebergbau bereits bekannt. Hierbei bildet das Zellenrad den Anfang der Dünnstromförderung durch die geschlossene Rohrleitung, in die mit der Zellenradschleuse körniges Gut, u.a. Waschberge oder Baustoffe, eingebracht werden. Zum Ausgleich des reibenden Verschleißes weisen derartige Zellenradschleusen einen Axialvorschub des Zellenrades in den Konus der Verschleißbüchse zur Spaltverkleinerung auf. Dieser wird von Zeit zu Zeit von Hand nachgestellt, wenn Förderluft aus der Rohrleitung entgegen der Aufgaberichtung aus dem Aufgabetrichter austritt. Bei diesen Blasversatzmaschinen dient das Zellenrad zum Abbau des an sich geringen Drucks der Förderluft, die zudem keine erhöhte Temperatur aufweist. Die Abdichtung der Förderluft, die durch den Spalt am Zellenrad vorbei strömen kann, erfolgt mit Dichtungen. Dazu sind am Zellenrad Lippen vorgesehen, die mit der Verschleißbüchse eine Kammer bilden, in der Stopfbuchsen den Austritt von Förderluft aus der Förderleitung unter Umgehend des Zellenrades durch die Schleuse verhindern.

Solche Blasmaschinen sind als Zellenradschleusen bislang nicht für die Dampftrocknung von Reibungsverschleiß erzeugendem Gut in Erwägung gezogen worden.

Vielmehr sind für die Dampftrockner, welche in der Rübenzuckergewinnung für die Rübenschnitzeltrocknung eingesetzt werden, andere Aufgabevorrichtungen konstruiert und vorgesehen worden, die jedoch wegen übermäßigen Verschleißes und mangelnder Dampfabdichtung nicht befriedigen.

Die Erfindung geht demgegenüber einen anderen Weg, dessen Grundgedanke im Anspruch 1 wiedergegeben ist. Weitere Merkmale der Erfindung sind Gegenstand der Unteransprüche.

Erfindungsgemäß wird die vorstehend mit ihren Hauptmerkmalen erläuterte vorbekannte, vornehmlich im Untertagebergbau eingesetzte Zellenradschleuse als Aufgabevorrichtung für den Dampftrockner verwendet. Dadurch, daß erfindungsgemäß hierzu das Gehäuse der Schleuse zum Druckausgleich eine Abdampfeinführung aus dem Trockner in das Zellenrad aufweist, kann die Übergabe des Gutes in den Dampftrockner praktisch unter Druckausgleich erfolgen, wobei gleichzeitig das Zellenrad den Dampfaustritt durch das Gut und das Gehäuse nach außen unterbindet. Da ferner erfindungsgemäß der Vorschubantrieb der Welle eine automatische Steuerung aufweist, die den Spalt auf dem kleinstmöglichen Bewegungsspiel für die Dampfabdichtung unter Ausgleich des reibenden Verschleißes hält, wird verhindert, daß sich zwischen Zellenrad und Verschleißbüchse Dampfaustritte bilden, wenn der unvermeidliche Verschleiß einsetzt. Dadurch wird erfindungsgemäß erreicht, daß die Zellenradschleuse während erheblicher Standzeiten trotz des reibenden Verschleißes praktisch keinen Dampf nach außen treten läßt, da jede Undichtigkeit mit der Steuerung sofort beseitigt wird.

Das erfindungsgemäße Verfahren ist daher bisher als einziges geeignet, die Fließbetttrockner über längere Reisezeiten so zu betreiben, daß kein Dampf nach außen tritt. Das erfindungsgemäße Verfahren wird daher nach Anspruch 2 hauptsächlich für diesen Zweck verwendet.

Da man den reibenden Verschleiß grundsätzlich nicht vermeiden kann und auch der erfindungsgemäß gesteuerte Vorschub des Zellenrades eine natürliche Grenze findet, ist es zweckmäßig, um diesen Zeitpunkt herauszuschieben, die ihm ausgesetzten Teile der Zellenradschleuse besonders zu schützen. Deswegen wird das erfindungsgemäße Verfahren vorzugsweise mit den Merkmalen des Anspruches 3 ausgeführt. Hierdurch ist gewährleistet, daß nach Abschluß der Reisezeit der Zellenradschleuse die notwendigen Erneuerungsmaßnahmen während kurzer Betriebsstillstände ausgeführt werden können.

Eine für die Ausführung des erfindungsgemäßen Verfahrens geeignete Steuerung darf andererseits den Zellenradvorschub nicht zur Unzeit betätigen, da dann die Gefahr besteht, daß das Zellenrad blockiert. Die mit ihren grundsätzlichen Merkmalen im Anspruch 4 gekennzeichnete erfindungsgemäße Steuerung vermeidet die damit verbundenen Betriebsstörungen. Sie sieht im wesentlichen eine Proportional/Integral-Regelung des Zellenradvorschubes vor. Der integrale Teil der Steuerung wird durch die Zeitintervalle gewährleistet, in denen der Vorschub zur Verkleinerung des Spaltes betätigt wird und zwischen denen ein Vorschub der Zellenradwelle in den Konus erfolgt. Diese Zeitintervalle lassen sich auf Erfahrungswerten aufbauen, die angeben, in welchen Normalzeiträumen der Verschleiß so weit gediehen ist, daß erste Dampfleckagen auftreten. Bei der Schnitzeltrocknung hat sich ergeben, daß dies in der Regel in 30 Minuten der Fall ist. In diesen Fällen vergeht also eine halbe Stunde, ehe die Steuerung eingreift und die Zellenradwelle in den Konus verschiebt. Der proportionale Teil dieser Steuerung besteht in der Begrenzung des Vorschubes auf die Wiederherstellung des erforderlichen Drehspieles des Zellenrades in der Verschleißbüchse. Dies geschieht auf besondere Weise erfindungsgemäß dadurch, daß beim Wellenvorschub das dabei ansteigende Drehmoment gemessen wird, das nach bestimmtem Vorschub einen Sollwert erreicht, der dazu dient, den Vorschub stillzusetzen. Die Steuerung vermeidet dadurch die Blockierung des Zellenrades beim Verschleißausgleich. Ist der Sollwert aber erreicht, so wird der Vorschubantrieb umgesteuert und zieht das Zellenrad um eine bestimmte Wegstrecke aus dem Konus zurück, bis das erforderliche Drehspiel wieder hergestellt ist. Die Steuerung ist dadurch jederzeit beherrschbar und kann verhältnismäßig einfach ausgeführt werden.

Für die gekennzeichneten Anwendungsbeispiele ergibt sich eine zweckmäßige Spaltzurückstellung des Zellenrades um ca. 2 mm und ein Spalt von 0,1 mm, der dafür sorgt, daß unter den üblichen Dampfdrücken bei Dampftemperaturen bis zu 230°C keine Leckagen auftreten. Dies ist Gegenstand des Anspruches 5.

Wegen dieses einfachen Aufbaus der Steuerung ist die Verwirklichung der Merkmale des Anspruches 6 zweckmäßig, wonach zur Erfassung der axialen Bewegungen des Zellenrades, die durch den axialen Vorschub und den axialen Zurückzug der Zellenradwelle auftreten, Wegaufnehmer mit entsprechender Auswertung für die Steuerung vorgesehen sind.

Bei den bekannten Zellenradschleusen müssen zur Verminderung des Energieeinsatzes über eine Reduzierung der Reibung beim Umlauf des Zellenrades die Packungsringe mit Fett geschmiert werden. Es hat sich aber herausgestellt, daß derartige Packungsringe, die mit Fettpressen geschmiert werden, ihre Aufgabe nicht erfüllen. Tatsächlich gelangt das Fett nicht bis zu dem abgedichteten Spalt, der an den meistens vorgesehenen Lippen des Zellenrades endet und von der Verschleißbüchse sowie einer Lagerkammer der Zellenradwelle gebildet wird. Zudem ist der Fettverbrauch sehr hoch, was die Betriebskosten von Zellenradschleusen erheblich in die Höhe treibt. Für die erfindungsgemäße Verwendung der Zellenradschleusen ist es daher zweckmäßig, von den Merkmalen des Anspruches 7 Gebrauch zu machen. Danach entfällt eine Fettschmierung der Spaltabdichtung durch die Anwendung selbstschmierender Packungsringe, wobei die erforderliche Dichtigkeit durch den Druck ihrer hydraulischen Anpressung herbeigeführt wird.

Die Axialverstellung des Zellenrades, die bei herkömmlichen Zellenradschleusen in der Regel mechanisch ausgeführt ist und willkürlich von Hand betätigt wird, eignet sich für die Anwendung einer automatischen Steuerung aus diesem Grund nicht. Es ist daher zweckmäßig, die Merkmale des Anspruches 8 zu verwirklichen. Hierbei erfolgt die Axialverstellung der Zellenradwelle über einen Druckmittelzylinder mit den üblichen Steuerungsmitteln für doppelt wirkende Zylinder dieser Art.

Die Zellenradwelle wird bevorzugt auf zwei Lagern abgestützt, die ihrerseits gegen das Eindringen des Gutes geschützt werden müssen. Anderenfalls wären erhebliche und kurzzeitig auftretende Lagerschäden die Folge. Dafür eignet sich die Ausführungsform des Anspruches 9. Hierbei sorgt die Unterbringung der Lager in zur Vermeidung des Eintrittes von Gut mit Sperrluft beaufschlagten Lagerkammern dafür, daß diese von dem Gut und Gutsbestandteilen zuverlässig freigehalten werden.

Die Einzelheiten, weiteren Merkmale und andere Vorteile der Erfindung ergeben sich aus der nachfolgenden Beschreibung einer Ausführungsform anhand der Figuren in der Zeichnung; es zeigen
- Fig. 1: eine Zellenradschleuse für die Verwendung als Aufgabevorrichtung für einen Dampftrockner der Rübenschnitzeltrocknung im Längsschnitt,
- Fig. 2: einen Querschnitt längs der Linie II-II der Fig. 1 und
- Fig. 3: ein Blockdiagramm zur Erläuterung der Vorschubsteuerung des Zellenrades.

In der Zeichnung ist der Dampftrockner nicht dargestellt. Die Zellenradschleuse 1 sitzt jedoch auf der oberen, seitlichen Öffnung des Dampftrockners in solcher Anordnung, daß ihr Austrag 2 unmittelbar mit der Eintragsöffnung des Trockners zusammenfällt. Dafür eignet sich eine Flanschverbindung, die bei 3 angedeutet ist. Die Flanschverbindung sitzt am Schleusengehäuse 4, in dem ein Zellenrad 5 umläuft, das drehfest auf einer Welle 6 befestigt ist. Die Welle ist an beiden Gehäuseenden mit Radiallagern 7, 8 abgestützt und wird über ein Getriebe 9 von einem Elektromotor 10 angetrieben.

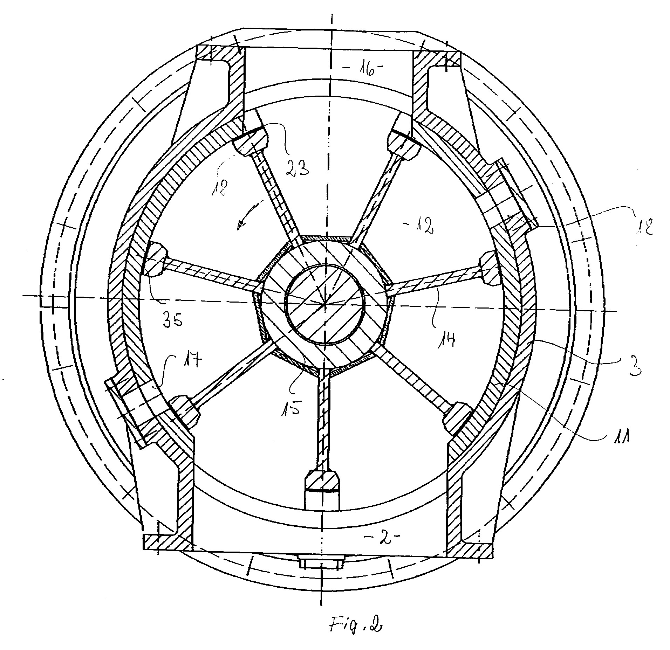

Das Zellenrad läuft in einer Verschleißbüchse 11 um, die das umgebende Gehäuse 3 schützt. Die Zellen 12 werden von den Speichen 14 des Zellenrades, seiner Nabe 15 und der zylindrischen Innenwand der Verschleißbüchse 11 gebildet. Die oben liegende Aufgabeöffnung 26 nimmt das unter atmosphärischem Druck stehende Gut auf, das in die nacheinander bei Drehung des Zellenrades in der durch den Pfeil nach Fig. 2 angedeuteten Richtung unter die Aufgabe 26 verstellt werden. Die kontinuierliche Drehnung der Zellen führt die mit dem Gut gefüllten Zellen zunächst an eine Dampfzuführung 18, welche die Zellen im wesentlichen unter den Druck des Dampfes im nachgeschalteten Dampftrockner setzt und dadurch an der Abgabeöffnung 16 einen weitgehenden Druckausgleich herbeiführt. Die Zellen streuen dann bei weiterer Drehung des Zellenrades in der angegebenen Pfeilrichtung das Gut in den Dampftrockner durch die Öffnung 16. Die entleerten Zellen gelangen vor eine Abdampföffnung 17, welche den Innendruck der Zellen auf den atmosphärischen Druck abbaut und den Abdampf in eine geschlossene Leitung übergibt. Dadurch können die Zellen drucklos unter die Aufgabeöffnung 26 geführt werden, ohne daß Dampf frei wird. Der Betrieb ist kontinuierlich, d.h. das Zellenrad wird von dem Antrieb 9, 10 ständig in Rotation gehalten, solange Aufgabegut an der Aufgabeöffnung 26 zur Verfügung steht.

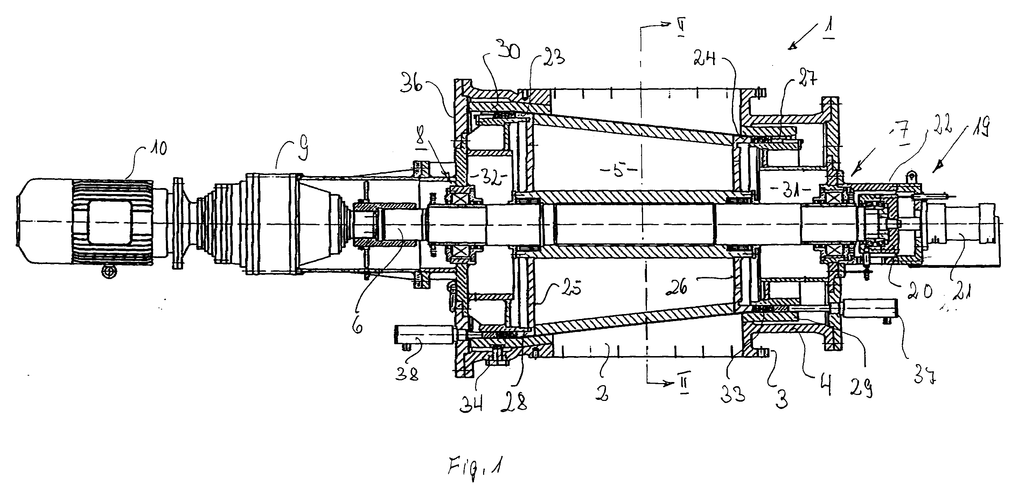

Wie sich aus Fig. 1 ergibt, ist das Zellenrad 5 axial konisch. Seinem Konus entspricht ein Konus der Verschleißbüchse 11. Reibender Verschleiß tritt daher an den mit Profilen 18 zur Vergrößerung des verschleißenden Werkstoffes versehenen Enden der Zellenradwände 14 auf. Zum Ausgleich dieses Verschleißes dient ein Axialvorschub der Welle 6 in den Konus. Diese allgemein mit 19 bezeichnete Vorschubeinrichtung sitzt an dem freien Ende der Welle 6 gegenüber dem Wellenantrieb 9, 10. Dazu ist das Wellenende in einem Kolben 20 eines Zylinders 21 gelagert. Die Kolbenstange ist durch einen Gehäusedeckel 22 geführt. Der Zylinder ist doppeltwirkend und kann daher die Welle 6 in beiden axialen Richtungen verstellen. Erfolgt die Verstellung in Konusrichtung, so verkleinert sich der Spalt 23 zwischen den Zellenradwänden und der Verschleißbüchse, der jedoch andererseits eine bestimmte minimale Größe erfordert, um mit einem optimalen Drehmoment über den Antrieb 9, 10 das Zellenrad in der Verschleißbüchse 11 rotieren zu lassen. Die Erfindung beruht darauf, daß das Drehspiel im Spalt 23 dann, wenn es einen minimalen Wert von ca. 0,1 mm annimmt, eine Abdichtung des Dampfes im Zellenrad herbeiführt, so daß keine Dampfleckagen auftreten können.

Ferner muß der Austritt von Dampf an beiden Enden des Zellenrades verhindert werden. Dazu sind an beiden Enden ringförmige Dichtlippen 23, 24 an den Deckeln 25, 26 des Zellenrades vorgesehen. Die Dichtlippen ragen in Kammern 27, 28, welche einerseits von den Enden 29, 30 der Verschleißbüchse 11 und andererseits von den Wänden je einer Kammer 31, 32 gebildet werden, welche die radialen Wellenlager 7, 8 einschließt. Eine Mehrzahl von Ringdichtungen 33, 34 dient zur Spaltabdichtung. Dadurch ist gewährleistet, daß an keiner Stelle der Zellenradschleuse Dampf nach außen treten kann.

Zur Verschleißminderung sind die Profile 18 an ihren reibenden Stirnseiten mit Auftragsschweißungen 35 gepanzert. Die Verschleißbüchse 11 ist zur Minimierung des eintretenden Verschleißes gehärtet und aus einem hochlegierten Spähroguß hergestellt. Sie kann zusammen mit dem Zellenrad aus dem Gehäuse durch Demontage des angeflanschten Lagerdeckels 36 herausgezogen und durch eine neue Einheit ersetzt werden.

Auch die Dichtlippen 23, 24 unterliegen reibendem Verschleiß. Sie sind daher ebenfalls durch spezielle Auftragsschweißungen hoch verschleißfest gemacht.

Die Packungsringe 33, 34 werden in ihrer Aufnahmekammer mit Hydraulikzylindern 37, 38 unter Druck gehalten und üben dadurch den erforderlichen Dichtdruck aus. Es handelt sich um selbstschmierende Packungsringe, die keiner Fettschmierung bedürfen.

Die Lagerkammern 31 und 32 werden unter den Druck von Sperrluft gesetzt. Dadurch wird verhindert, daß bei dem üblichen Betrieb in belasteter Atmosphäre Teile des Aufgabegutes bzw. seiner Begleiter in die Lager 7, 8 und die Verstelleinrichtung 19 gelangen können.

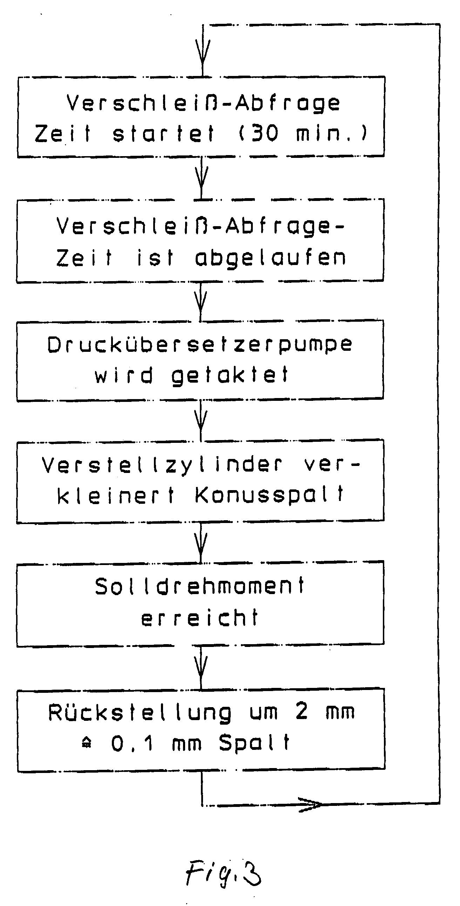

Der beschriebene Vorschubantrieb 19 der Welle 6 weist eine automatische Steuerung auf, die gemäß dem in Fig. 3 wiedergegebenen Blockdiagramm arbeitet. Mit ihr wird der hydraulische Verstellantrieb 21 in beiden Richtungen betätigt. Die Steuerung betätigt den hydraulischen Verstellantrieb 21 während des laufenden Betriebes in Richtung des Konus nach vorbestimmten Zeitintervallen, die im Blockdiagramm mit 30 Minuten angegeben sind. Die Bewegung des Kolbens wird solange in den Innenkonus der Schleißbüchse fortgesetzt, bis ein vorgewähltes Drehmoment an der Welle 6 auftritt. Zwischen diesem Soll- und dem jeweiligen Ist-Drehmoment erfolgt ein steter Vergleich. Die Steuerung steuert bei Erreichen des Sollwertes den Antrieb 21 um, der daraufhin die Welle 6 mit dem Zellenrad 5 aus dem Konus herausbewegt, bis das erforderliche Bewegungsspiel wieder erreicht ist. In dem letzten Block des Diagramms erfolgt dies über einen Weg von 2 mm zur Wiederherstellung des Bewegungsspieles bei einem Spalt von ca. 0,1 mm.

Im allgemeinen kann davon ausgegangen werden, daß der horizontale Verschleißweg ca. 40 mm beträgt, wobei die verschleißbare Dicke der Verschleißbüchse und des Zellenrades etwa 4 mm ausmacht. Dadurch ist es möglich, lange Reisezeiten der Zellenradschleuse zu erzielen.

## Patentansprüche

1. Verfahren zum Abdichten von Dampftrocknern bei Ein- und Austrag von Reibungsverschleiß erzeugendem Gut, gekennzeichnet durch die Verwendung einer Zellenradschleuse (1) mit einem in einer drehfesten konischen Verschleißbüchse (11) umlaufenden konischen Zellenrad (5) auf einer Welle (6) mit Axialvorschub in den Konus der Verschleißbüchse (11) zur Spaltverkleinerung (23) und Ringdichtungen (33, 34) an Lippen (23, 24) des Zellenrades mit horizontaler Welle (6), wobei das Gehäuse der Schleuse (1) zum Druckausgleich eine Dampfeinführung (18) und eine Dampfabführung (17) und der Vorschubantrieb (19) der Welle (6) eine automatische Steuerung aufweisen, die den Spalt (23) auf dem kleinstmöglichen Bewegungsspiel für die Dampfabdichtung unter Ausgleich des reibenden Verschleißes hält.

2. Verfahren nach Anspruch 1, gekennzeichnet durch die Verwendung einer konischen Zellenradschleuse (1) als Ein- und Austragsvorrichtung für einen Dampftrockner.

3. Verfahren nach einem der Ansprüche 1 oder 2, gekennzeichnet durch eine verschleißgeschützte Büchse (11) mit einem gepanzerten Zellenrad (11) als auswechselbare Einheit.

4. Vorrichtung zur Durchführung des Verfahrens nach einem oder mehreren der Ansprüche 1 bis 3, gekennzeichnet durch eine Steuerung, die in vorgegebenen Zeitintervallen den Vorschubantrieb (19) zur Verkleinerung des Spaltes betätigt und das dabei ansteigende Drehmoment mißt, bis ein Solldrehmoment erreicht ist.

5. Vorrichtung nach Anspruch 3, dadurch gekennzeichnet, daß der axiale Stellweg des Zellenrades (5) ca. 2 mm und der Spalt ca. 0,1 mm bei einem horizontalen Verschleißweg von ca. 40 mm und einer Verschleißdicke der Verschleißbüchse (11) und des Zellenrades (5) von ca. 4 mm ausmachen.

6. Vorrichtung nach einem der Ansprüche 4 oder 5, dadurch gekennzeichnet, daß die Steuerung zur Erfassung der axialen Bewegungen des Zellenrades (5) bei der Verstellung durch die Steuerung Wegaufnehmer und deren Auswertung aufweist.

7. Vorrichtung nach einem oder mehreren der Ansprüche 4 bis 6, dadurch gekennzeichnet, daß zur Spaltabdichtung selbstschmierende Packungsringe (33, 34) mit hydraulischer Anpressung (38) dienen.

8. Vorrichtung nach einem oder mehreren der Ansprüche 4 bis 7, dadurch gekennzeichnet, daß zur Axialverstellung des Zellenrades (5) ein Druckmittelzylinder (21) auf das freie Ende der Zellenradwelle (6) wirkt.

9. Vorrichtung nach einem oder mehreren der Ansprüche 4 bis 8, dadurch gekennzeichnet, daß die Zellenradwelle in Lagerkammern (31, 32) umläuft, welche mit Sperrluft zur Vermeidung des Eintrittes von Aufgabegut beaufschlagt sind.
